# EUROPEAN PATENT APPLICATION

(11) **EP 4 787 536 A1**
(43) Date of publication of application: **05.08.2026**
(21) Application number: 24895598.1
(22) Date of filing: 25.06.2024
(51) Int. Cl.: H01M 10/42, H01M 10/613

(54) **THERMAL MANAGEMENT SYSTEM, ENERGY STORAGE SYSTEM, AND PHOTOVOLTAIC INVERTER SYSTEM**

(30) Priority: 27.11.2023 CN 202311607836
(71) Applicant: Huawei Digital Power Technologies Co., Ltd., Shenzhen, Guangdong 518043 (CN)
(72) Inventor: WU, Yingwen, Shenzhen, Guangdong 518043 (CN); LI, Malin, Shenzhen, Guangdong 518043 (CN); LI, Quanming, Shenzhen, Guangdong 518043 (CN); WONG, Mingfung, Shenzhen, Guangdong 518043 (CN)
(74) Representative: Epping - Hermann - Fischer
(86) International application number: PCT/CN2024/101127
(87) International publication number: WO 2025/112495

(57) **Abstract**

This application provides a thermal management system, including a coolant circulation system, a refrigerant circulation system, and a heat exchange component. The refrigerant circulation system includes a refrigerant flow channel plate, refrigerant flow channels are integrated into the refrigerant flow channel plate and are configured to communicate with the heat exchange component. The coolant circulation system includes a first coolant flow channel plate and a second coolant flow channel plate, coolant flow channels are integrated into each coolant flow channel plate and are configured to communicate with the heat exchange component, and coolant flow channels of the first coolant flow channel plate communicate with coolant flow channels of the second coolant flow channel plate. The second coolant flow channel plate, the first coolant flow channel plate, and the refrigerant flow channel plate are sequentially stacked. The refrigerant flow channel plate and the two coolant flow channel plates are stacked, to reduce difficulty in mounting and maintenance. In addition, the coolant flow channels configured to communicate components of the coolant circulation system are distributed and stacked on the two coolant flow channel plates, to reduce an area occupied by the coolant flow channel plates, and reduce difficulty in arranging the coolant flow channels.

## Description

This application claims priority to Chinese Patent Application No. 202311607836.3, filed with the China National Intellectual Property Administration on November 27, 2023 and entitled "THERMAL MANAGEMENT SYSTEM, ENERGY STORAGE SYSTEM, AND PHOTOVOLTAIC INVERTER SYSTEM", which is incorporated herein by reference in its entirety.

### TECHNICAL FIELD

This application relates to the field of thermal management technologies, and in particular, to a thermal management system, an energy storage system, and a photovoltaic inverter system.

### BACKGROUND

As new energy technologies flourish, energy storage technologies attract more attention. In addition to a battery cluster configured to store electric energy and an electronic device configured to manage the battery cluster, an existing energy storage system further includes a thermal management system configured to heat or dissipate heat for the battery cluster and the electronic device, to ensure performance and safety of the battery cluster and the electronic device.

In an existing technology, heat exchange is directly performed between a refrigerant and a thermal management object, to cool or heat the thermal management object. However, an existing refrigerant is usually a chemical substance. Therefore, a pipe needs to use an anti-corrosion material like a metal, to avoid corrosion. On one hand, costs are increased. On the other hand, when a leakage or the like occurs, it is difficult to perform cleaning, and may harm the human body and damage the environment.

Therefore, a secondary cooling technology is proposed. To be specific, heat exchange is performed between a refrigerant and a coolant like water, and the thermal management object is cooled or heated by using the coolant obtained through heat exchange. Because the coolant has low corrosiveness, a requirement for a material of the pipe is low, and a material like plastic may be used. This greatly reduces costs. In addition, a main component of the coolant is water. When a leakage or the like occurs, it is easy to perform cleaning, and barely harms the human body and the environment.

However, in the secondary cooling technology, a coolant loop and a refrigerant loop need to be deployed, which causes high costs of the thermal management system, complex mounting, large occupied space, and the like. Especially when thermal management needs to be performed on a large quantity of battery clusters in a plant and the like, there are a large quantity of pipes with a complex connection relationship. It is difficult for mounting and maintenance.

### SUMMARY

Embodiments of this application provide a thermal management system, an energy storage system, and a photovoltaic inverter system, to reduce difficulty in mounting and maintenance.

According to a first aspect, a thermal management system is provided. The thermal management system includes a coolant circulation system, a refrigerant circulation system, and at least one heat exchange component, and the heat exchange component is configured to perform heat exchange between a coolant and a refrigerant.

The refrigerant circulation system includes a refrigerant flow channel plate and a plurality of refrigerant-end components, refrigerant flow channels are integrated into the refrigerant flow channel plate, and the refrigerant flow channels are configured to communicate the plurality of refrigerant-end components with the heat exchange component.

The coolant circulation system includes a first coolant flow channel plate, a second coolant flow channel plate, and a plurality of coolant-end components, the second coolant flow channel plate, the first coolant flow channel plate, and the refrigerant flow channel plate are sequentially stacked, coolant flow channels are integrated into each coolant flow channel plate, coolant flow channels of the first coolant flow channel plate communicate with coolant flow channels of the second coolant flow channel plate, and the coolant flow channels are configured to communicate the plurality of coolant-end components with the heat exchange component.

The heat exchange component is mounted on a surface that is of the refrigerant flow channel plate and that is away from the second coolant flow channel plate.

The refrigerant flow channel plate and the two coolant flow channel plates are stacked, and the heat exchange component is integrated onto the refrigerant flow channel plate, to reduce difficulty in mounting and maintenance.

In addition, in comparison with a manner of arranging the coolant flow channels onto one coolant flow channel plate, the coolant flow channels configured to communicate components of the coolant circulation system are distributed and stacked on the two coolant flow channel plates, to reduce an area occupied by the coolant flow channel plates, and reduce difficulty in arranging the coolant flow channels. This further improves practicability of the thermal management system in embodiments of this application.

The plurality of refrigerant-end components are disposed on at least one of a surface that is of the first coolant flow channel plate and that is away from the refrigerant flow channel plate and a surface that is of the second coolant flow channel plate and that is away from the first coolant flow channel plate.

For example, at least one of the plurality of refrigerant-end components, for example, a gas-liquid separator, is further mounted on the surface that is of the first coolant flow channel plate and that is away from the refrigerant flow channel plate.

In addition, the refrigerant-end component mounted on the first coolant flow channel plate is located, on the first coolant flow channel plate, outside projection of the second coolant flow channel plate on the first coolant flow channel plate.

Therefore, the coolant flow channel plate located at a bottom layer is not blocked, and the refrigerant-end component is disposed on the coolant flow channel plate located in the middle, to facilitate mounting and maintenance of the refrigerant-end component. In addition, the refrigerant-end component does not additionally occupy device configuration space on the coolant flow channel plate at the bottom layer.

For another example, at least one of the plurality of refrigerant-end components, for example, an expansion valve, is mounted on the surface that is of the second coolant flow channel plate and that is away from the first coolant flow channel plate.

In addition, at least one of the plurality of coolant-end components, for example, a multi-port valve, is further mounted on the surface that is of the second coolant flow channel plate and that is away from the first coolant flow channel plate.

The refrigerant-end component and the coolant-end component are disposed on the surface that is of the second coolant flow channel plate and that is away from the first coolant flow channel plate, to facilitate mounting and maintenance of the component.

In embodiments of this application, there are a plurality of heat exchange components, and the heat exchange components communicate with the refrigerant flow channels and the coolant flow channels of the first coolant flow channel plate in parallel.

For example, the heat exchange components include a plurality of evaporators, and the plurality of evaporators communicate with the refrigerant flow channels and the coolant flow channels of the first coolant flow channel plate in parallel, to improve evaporation efficiency.

For another example, the heat exchange components include a plurality of condensers, the plurality of condensers communicate with the refrigerant flow channels and the coolant flow channels of the first coolant flow channel plate in parallel, to improve condensation efficiency.

In an implementation in which the plurality of condensers or evaporators communicate "in parallel", the following solution may be used.

The coolant flow channels of the first coolant flow channel plate include a main coolant flow channel and a plurality of branch coolant flow channels, one end of each branch coolant flow channel communicates with the main coolant flow channel, and the plurality of branch coolant flow channels have a same cross-sectional area.

In addition, the coolant flow channels of the refrigerant flow channel plate include a main refrigerant flow channel and a plurality of branch refrigerant flow channels, one end of each branch refrigerant flow channel communicates with the main refrigerant flow channel, and the plurality of branch refrigerant flow channels have a same cross-sectional area.

The other end of each branch coolant flow channel is configured to communicate with one evaporator, and the other end of each branch refrigerant flow channel is configured to communicate with one evaporator.

The other end of each branch coolant flow channel is configured to communicate with one condenser, and the other end of each branch refrigerant flow channel is configured to communicate with one condenser.

The plurality of branch coolant flow channels have the same cross-sectional area, so that the coolant can evenly enter the condenser or the evaporator.

The plurality of branch refrigerant flow channels have the same cross-sectional area, so that the refrigerant can evenly enter the condenser or the evaporator.

In a possible implementation, the cross-sectional area of the branch coolant flow channel is less than the cross-sectional area of the main coolant flow channel.

In addition, the cross-sectional area of the branch refrigerant flow channel is less than the cross-sectional area of the main refrigerant flow channel.

In embodiments of this application, the refrigerant flow channel plate extends in a plate shape, the refrigerant flow channel plate includes a side wall perpendicular to an extending direction of the refrigerant flow channel plate, and when the refrigerant flow channel plate is disposed in a direction parallel to a direction of gravity, a side wall that is of the refrigerant flow channel plate, that is perpendicular to the direction of gravity, and that is away from the ground is provided with a refrigerant inlet and a refrigerant outlet for the refrigerant to flow in and out.

For example, the refrigerant inlet and the refrigerant outlet are formed in a tubular shape extending in a first direction, the first direction is perpendicular to a side surface on which the refrigerant inlet and the refrigerant outlet are located, and the first direction is parallel to the extending direction of the refrigerant flow channel plate, to facilitate arrangement of pipes configured to communicate the refrigerant flow channel plate with a compressor.

In addition, in embodiments of this application, the surface that is of the second coolant flow channel plate and that is away from the first coolant flow channel plate is provided with a coolant inlet and a coolant outlet for the coolant to flow in and out.

For example, the coolant inlet and the coolant outlet are formed in a tubular shape extending in a second direction, and the second direction is perpendicular to an extending direction of the second coolant flow channel plate, to facilitate arrangement of pipes configured to communicate the coolant flow channel plate with a cooling plate.

In a possible implementation, the heat exchange components include at least one condenser and at least one evaporator, the at least one condenser is located on one side of a first axis, the at least one condenser is located on the other side of the first axis, and the first axis is a straight line on a surface that is of the refrigerant flow channel plate and that is away from the first coolant flow channel plate.

In addition, the gas-liquid separator in the plurality of refrigerant-end components is mounted on the surface that is of the first coolant flow channel plate and that is away from the refrigerant flow channel plate, and the gas-liquid separator and the evaporator are located on the same side of the first axis.

The multi-port valve in the plurality of coolant-end components is mounted on the surface that is of the second coolant flow channel plate that is away from the first coolant flow channel plate, and the multi-port valve and the condenser are located on the same side of the first axis.

High-temperature components are located on a same side of the thermal management system, and low-temperature components are located on the other side of the thermal management system, to facilitate arrangement of flow channels configured to connect the high-temperature components and flow channels configured to connect the low-temperature components, and also facilitate heat insulation between the high-temperature components and the low-temperature components.

In another possible implementation, the heat exchange components include a plurality of condensers and a plurality of evaporators. When the refrigerant flow channel plate is placed in a direction parallel to the direction of gravity, the plurality of condensers are arranged in at least one column, the plurality of evaporators are arranged in at least one column, and a direction of the column is parallel to the direction of gravity. The expansion valve in the plurality of refrigerant-end components is mounted on the surface that is of the second coolant flow channel plate and that is away from the first coolant flow channel plate, and projection of the expansion valve on the refrigerant flow channel plate is located between the column of condensers and the column of evaporators that are adjacent.

Therefore, a length of a flow channel configured to communicate the expansion valve with the evaporator or the condenser can be reduced.

The heat exchange component includes the plurality of condensers and the plurality of evaporators. When the refrigerant flow channel plate is placed in a direction parallel to the direction of gravity, a height from each condenser to the ground is greater than or equal to a height from each evaporator to the ground. Therefore, gravity can be used to facilitate flowing of the refrigerant from the condenser to the evaporator.

According to a second aspect, an energy storage system is provided. The energy storage system includes a battery cluster and a thermal management system, and a coolant circulation system in the thermal management system includes a battery liquid cooling plate.

One end of the battery liquid cooling plate communicates with one coolant outlet of a second coolant flow channel plate, another end of the battery liquid cooling plate communicates with one coolant inlet of the second coolant flow channel plate, and the coolant outlet communicates with the coolant inlet through a coolant flow channel of the second coolant flow channel plate.

The battery cluster is disposed on the battery liquid cooling plate.

Therefore, a coolant that is obtained through heat exchange with a refrigerant and that flows out of the coolant outlet of the second coolant flow channel plate enters the battery liquid cooling plate from the end of the battery liquid cooling plate, and heat exchange is performed, on the battery liquid cooling plate, between the coolant and the battery cluster disposed on the battery liquid cooling plate. The coolant obtained through heat exchange flows out from the another end of the battery liquid cooling plate, and flows back to the coolant flow channel through the coolant inlet of the second coolant flow channel plate.

In a possible implementation, the energy storage system further includes a power converter, and the power converter is configured to perform power conversion on the battery cluster.

The coolant circulation system in the thermal management system includes a power converter liquid cooling plate.

One end of the power converter liquid cooling plate communicates with one coolant outlet of the second coolant flow channel plate, another end of the power converter liquid cooling plate communicates with one coolant inlet of the second coolant flow channel plate, and the coolant outlet communicates with the coolant inlet through the coolant flow channel of the second coolant flow channel plate.

The power converter liquid cooling plate is disposed on the power converter liquid cooling plate.

Therefore, a coolant that is obtained through heat exchange with a refrigerant and that flows out of the coolant outlet of the second coolant flow channel plate enters the power converter liquid cooling plate from the end of the power converter liquid cooling plate, and heat exchange is performed, on the power converter liquid cooling plate, between the coolant and the power converter disposed on the power converter liquid cooling plate. The coolant obtained through heat exchange flows out from the another end of the power converter liquid cooling plate, and flows back to the coolant flow channel through the coolant inlet of the second coolant flow channel plate.

According to a third aspect, a photovoltaic inverter system is provided. The photovoltaic inverter system includes a photovoltaic panel, a photovoltaic inverter, an energy storage system, and a thermal management system. The photovoltaic panel is configured to convert solar energy into electric energy, the energy storage system includes a battery cluster, the battery cluster is configured to store the electric energy from the photovoltaic panel, and the photovoltaic inverter is configured to convert a direct current from the photovoltaic panel into an alternating current. A coolant circulation system in the thermal management system includes a battery liquid cooling plate.

One end of the battery liquid cooling plate communicates with one coolant outlet of a second coolant flow channel plate, another end of the battery liquid cooling plate communicates with one coolant inlet of the second coolant flow channel plate, and the coolant outlet communicates with the coolant inlet through a coolant flow channel of the second coolant flow channel plate.

The battery cluster is disposed on the battery liquid cooling plate.

Therefore, a coolant that is obtained through heat exchange with a refrigerant and that flows out of the coolant outlet of the second coolant flow channel plate enters the battery liquid cooling plate from the end of the battery liquid cooling plate, and heat exchange is performed, on the battery liquid cooling plate, between the coolant and the battery cluster disposed on the battery liquid cooling plate. The coolant obtained through heat exchange flows out from the another end of the battery liquid cooling plate, and flows back to the coolant flow channel through the coolant inlet of the second coolant flow channel plate.

In a possible implementation, the photovoltaic inverter system further includes a power converter, and the power converter is configured to perform power conversion on the battery cluster.

The coolant circulation system in the thermal management system includes a power converter liquid cooling plate.

One end of the power converter liquid cooling plate communicates with one coolant outlet of the second coolant flow channel plate, another end of the power converter liquid cooling plate communicates with one coolant inlet of the second coolant flow channel plate, and the coolant outlet communicates with the coolant inlet through the coolant flow channel of the second coolant flow channel plate.

The power converter liquid cooling plate is disposed on the power converter liquid cooling plate.

Therefore, a coolant that is obtained through heat exchange with a refrigerant and that flows out of the coolant outlet of the second coolant flow channel plate enters the power converter liquid cooling plate from the end of the power converter liquid cooling plate, and heat exchange is performed, on the power converter liquid cooling plate, between the coolant and the power converter disposed on the power converter liquid cooling plate. The coolant obtained through heat exchange flows out from the another end of the power converter liquid cooling plate, and flows back to the coolant flow channel through the coolant inlet of the second coolant flow channel plate.

Configurations and structures of components in thermal management systems in the second aspect and the third aspect are similar to those in the first aspect. Herein, detailed descriptions thereof are omitted to avoid repetition.

### BRIEF DESCRIPTION OF DRAWINGS

FIG. 1 is a diagram of an architecture of an example of a photovoltaic inverter system applicable to a thermal management system according to an embodiment of this application;
FIG. 2 is a diagram of an architecture of an example of an energy storage system applicable to a thermal management system according to an embodiment of this application;
FIG. 3 is a diagram of an architecture of an example of a thermal management system according to an embodiment of this application;
FIG. 4 is a diagram of arrangement of a thermal management system according to an embodiment of this application;
FIG. 5 is a diagram of an example of arrangement of a plurality of condensers and evaporators;
FIG. 6 is a diagram of a structure of refrigerant flow channels configured to communicate a plurality of condensers or evaporators in parallel;
FIG. 7 is a diagram of arrangement of a configuration surface of a coolant flow channel plate at a middle layer;
FIG. 8 is a diagram of an example of arrangement of a configuration surface of a coolant flow channel plate at a bottom layer;
FIG. 9 is a diagram of another example of arrangement of a configuration surface of a coolant flow channel plate at a bottom layer; and
FIG. 10 is a diagram of another example of a structure of a mounting surface of a refrigerant flow channel plate.

### DESCRIPTION OF EMBODIMENTS

The following describes technical solutions in this application with reference to accompanying drawings.

A thermal management system provided in this application is applicable to an energy storage system or a photovoltaic inverter system, and in particular, to a scenario in which a large-scale battery cluster is used as a thermal management object, for example, an energy storage system or a photovoltaic inverter system in a plant.

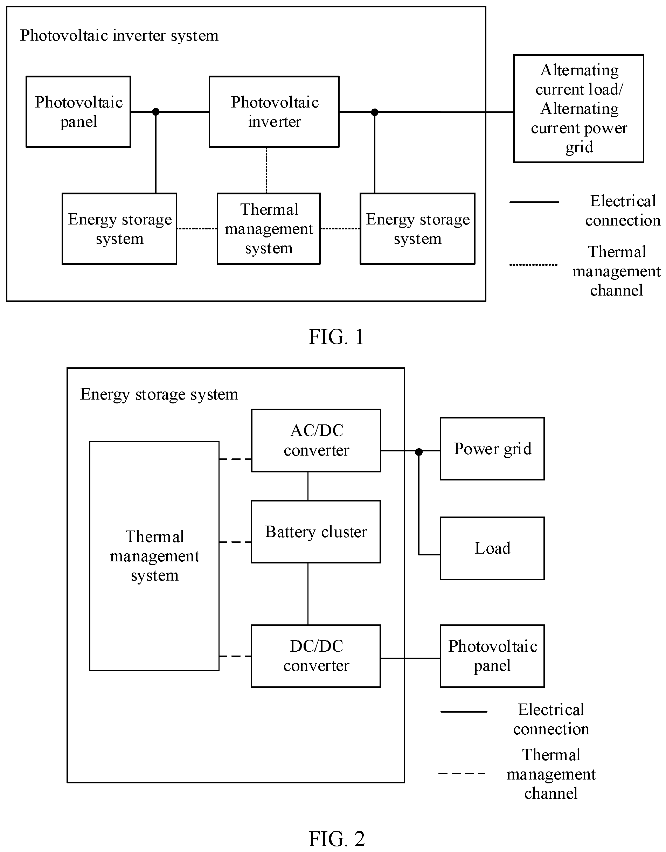

FIG. 1 shows an example of a photovoltaic inverter system applicable to a thermal management system according to this application. As shown in FIG. 1, the photovoltaic inverter system includes a photovoltaic (photovoltaic, PV) panel and a photovoltaic inverter. The photovoltaic panel converts solar energy into electric energy. Because the photovoltaic panel generates a direct current, the photovoltaic inverter needs to convert the direct current into an alternating current, to facilitate transmission and utilization of power.

The photovoltaic inverter includes a direct current-to-alternating current (direct current-to-alternating current, DC/AC) converter, and the DC/AC converter is configured to convert a direct current into an alternating current.

The photovoltaic inverter also includes a maximum power point tracking (maximum power point tracking, MPPT) module. The MPPT module is configured to track a maximum voltage-current value, so that a power generation system outputs a current at maximum power.

The MPPT module and a DC/DC module in the photovoltaic inverter may be disposed in a same packaged device, or may be disposed in different packaged devices.

The MPPT module may include a direct current-to-direct current (direct current-to-direct current, DC/DC) converter, and the DC/DC converter is configured to perform voltage regulation processing (or voltage conversion processing) on a direct current generated by a PV component. The direct current obtained through voltage regulation may be output to a power storage system. One end (denoted as an end A) of the DC/AC converter is connected to the MPPT module and an energy storage system, and the other end B is configured to connect to an alternating current power grid or an alternating current load, so that the DC/AC converter converts a direct current output by the MPPT module or the energy storage system into an alternating current, and supplies the alternating current to the alternating current load or the alternating current power grid.

In addition, the other end B (denoted as the end B) of the DC/AC converter may be further connected to another energy storage system via an inverter (namely, the DC/AC converter). The inverter is configured to convert an alternating current from the photovoltaic inverter into a direct current, and store the direct current in the energy storage system. In addition, a direct current from the energy storage system may be converted into an alternating current, and the alternating current is supplied to the alternating current load or the alternating current power grid.

It should be noted that the photovoltaic inverter system provided in this application may include only the energy storage system connected to the end A of the DC/AC converter in the photovoltaic inverter, or may include only the energy storage system connected to the end B of the DC/AC converter in the photovoltaic inverter, or may include the foregoing two energy storage systems.

The photovoltaic inverter system may further include a thermal management system. The thermal management system cools a battery cluster of the energy storage system, a DC/DC converter of the photovoltaic inverter, and some or all devices of the DC/AC converter through a coolant. The following describes the thermal management system in detail.

FIG. 1 shows an example of an energy storage system applicable to a thermal management system according to this application. As shown in FIG. 2, the energy storage system includes one or more DC/DC converters, one or more battery clusters, and one or more AC/DC converters. In addition, although not shown in the figure, the energy storage system further includes one or more battery management systems (battery management system, BMS). Each battery pack corresponds to one BMS. The BMS is usually configured to implement functions such as dynamic monitoring of charging and discharging of a battery pack, battery pack balancing, and evaluation of a charge status of the battery pack.

When the energy storage system includes a plurality of battery clusters, the plurality of battery clusters are connected in parallel. A battery cluster includes a plurality of battery packs. Each battery pack includes one or more batteries (PACK). In an implementation, each battery pack may further include a battery management unit (battery management unit, BMU), and the energy storage system further includes a battery control unit (battery control unit, BCU). The BMS includes the BMU and the BCU. The BMU is configured to monitor information such as a voltage and a temperature of the PACK, and report the information to the BCU. The BCU monitors the PACK based on the information, and generates a power control instruction for the PACK.

The PACK in embodiments of this application may be a single storage battery, or may be a storage battery cluster including a plurality of storage batteries. Specifically, the storage battery may alternatively be one or a combination of a lead-carbon battery, a lithium iron phosphate battery, a ternary lithium battery, a sodium-sulfur battery, and a flow battery.

In the energy storage system, one end of the DC/DC converter is configured to connect to a photovoltaic panel, the other end of the DC/DC converter is connected to the battery cluster, and the DC/DC converter is configured to perform power conversion processing such as voltage regulation on a direct current from the photovoltaic panel, and then output the direct current to the battery cluster. One end of the AC/DC converter is connected to the battery cluster, and the other end of the AC/DC converter is connected to an alternating current power grid and/or an alternating current battery. The AC/DC converter converts a direct current from the battery, in other words, converts the direct current into an alternating current, and supplies the alternating current to a load or the power grid.

In a possible implementation, although not shown in the figure, another DC/DC converter may be further configured between the AC/DC converter and the battery cluster. The another DC/DC converter is configured to perform power conversion processing such as boosting on the direct current from the battery cluster.

The energy storage system may further include a thermal management system. The thermal management system cools the battery cluster, the DC/DC converter, and some or all devices of the DC/AC converter of the energy storage system through a coolant.

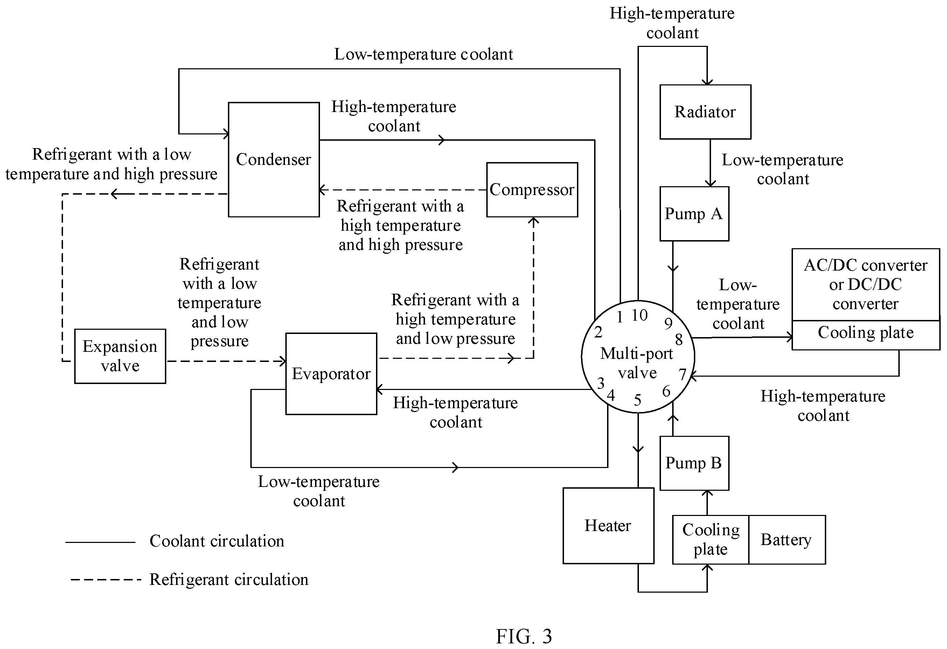

The following describes a structure of a thermal management system 100 in this application in detail with reference to FIG. 3.

FIG. 3 is a diagram of a logical architecture of an example of a thermal management system 100 according to this application. As shown in FIG. 3, the thermal management system 100 includes a coolant circulation system, a refrigerant circulation system, and a heat exchange system.

The coolant circulation system uses a coolant as a thermal management medium. As an example rather than a limitation, the coolant may include water. In addition, when thermal management is performed on a battery, the coolant may be deionized, to prevent the coolant from being conductive. In addition, when an energy storage system or a photovoltaic inverter system is used in cold regions, antifreeze may be further added to the coolant, to prevent the coolant from condensing.

The refrigerant circulation system uses a refrigerant as a thermal management medium. The refrigerant (refrigerant) may also be referred to as a refrigerant, a refrigerant, or a refrigerant, and is a medium substance for energy conversion in various heat engines. The substance typically increases power with a reversible phase change (for example, a gas-liquid phase change).

In this application, the refrigerant is working fluid used to transfer heat energy, to generate freezing effect. In other words, the refrigerant may transfer heat through evaporation and condensation. The refrigerant may be a substance that easily absorbs heat and becomes gas and that easily dissipates heat and becomes liquid. For example, the refrigerant is an intermediate substance in a refrigeration process, and performs temperature reduction by accepting cooling of a refrigerant and then cools another cooled substance. As an example rather than a limitation, in this application, the refrigerant may include ammonia, air, water, salt water, chlorofluorocarbon (or chlorofluorocarbon), and the like. In this application, when being pressed, a gaseous refrigerant dissipates heat and becomes liquid. When high-pressure liquid is depressurized and becomes gas, heat is absorbed.

As shown in FIG. 3, the heat exchange system includes one or more condensers 110 and one or more evaporators 120. Although not shown in the figure, the condenser 110 and the evaporator 120 each include a coolant channel and a refrigerant channel. The condenser 110 may also be referred to as a condensation plate heat exchanger, the evaporator 120 may also be referred to as an evaporation plate heat exchanger, and heat exchange may be performed between the coolant and the refrigerant in the condenser 110 and the evaporator 120.

It should be noted that, when the heat exchange system includes a plurality of condensers 110, the plurality of condensers 110 communicate with each other in parallel. The following describes "communicating in parallel" in detail with reference to a circulation process of the refrigerant.

Similarly, when the heat exchange system includes a plurality of evaporators 120, the plurality of evaporators 120 communicate with each other in parallel.

In addition, in this application, the condenser 110 and the evaporator 120 participate in temperature and gas phase change processes of the refrigerant and the coolant. Therefore, the condenser 110 and the evaporator 120 may also be considered as belonging to the refrigerant circulation system and the coolant circulation system.

The following describes the refrigerant circulation system.

As shown in FIG. 3, the refrigerant system includes a plurality of refrigerant-end components, for example, a compressor, the condenser 110, the evaporator 120, and an expansion valve 130.

The compressor (gas compressor) is configured to compress a gaseous refrigerant with a low temperature and low pressure that enters from an input port, and the compressed gaseous refrigerant is heated up and converted into a gaseous refrigerant with a high temperature and high pressure. In addition, the gaseous refrigerant with a high temperature and high pressure is output from an output port of the compressor. The compressor is a machine that compresses gas and increases gas pressure simultaneously. Based on a working principle, the compressor may be classified into a positive-displacement (positive-displacement) compressor and an aerodynamic (aerodynamic) compressor. The positive-displacement compressor introduces a gas into airtight space, and compresses a space volume scattered by the original gas, to increase internal pressure, so as to convert mechanical energy into pressure energy. Based on different compression modes of the positive-displacement compressor, the positive-displacement compressor may be classified into a reciprocating compressor, a rotary compressor, a scroll compressor, a spiral compressor, and the like. The aerodynamic compressor uses high-speed rotation of an impeller to force a gas to flow at a high speed, to generate kinetic energy; and in a process of passing through a booster ring, increases a section area to decrease a flow rate of air, so that the kinetic energy of the gas is converted into pressure energy and pressure is increased. Currently, this type of compressors includes a centrifugal compressor, an axial flow compressor, and the like. Based on a lubrication mode, the compressor may be classified into an oil-free air compressor and an oil-lubricated air compressor. Based on performance, the compressor may be classified into a low noise compressor, a variable frequency compressor, and an explosion-proof compressor. Based on the performance, the compressor may be classified into a stationary compressor, a mobile compressor, and a closed compressor. In this application, one compressor may be used, or a plurality of compressors connected in parallel or in series may be used. This is not specifically limited in this application.

The expansion valve 130 is configured to release pressure of a high-pressure refrigerant. A temperature of the refrigerant obtained through pressure release is reduced, and the refrigerant is converted into a low-temperature refrigerant. The expansion valve 130 may reduce pressure (or release pressure or throttle) of the input high-pressure refrigerant, to obtain the low-temperature refrigerant. The expansion valve 130 may also be referred to as an electronic expansion valve 130, a thermal expansion valve 130, or a throttle valve. The expansion valve 130 is configured to throttle a liquid refrigerant with a medium temperature and high pressure into wet vapor with a low temperature and low pressure. Then, the refrigerant absorbs heat in a heat exchange plate to achieve cooling effect.

In embodiments of this application, the expansion valve 130 includes a valve body, a sensing bulb, and an equalizing pipe. A refrigerant filled in the sensing bulb is in a gas-liquid equilibrium saturation state. The refrigerant in the sensing bulb does not communicate with the refrigerant in the system. The refrigerant is usually tied to an outlet pipe of an evaporator 120, and is in close contact with the pipe to sense a vapor temperature at an outlet of the evaporator 120. Because the refrigerant inside the sensing bulb is saturated, pressure at the saturated state and at the temperature is transferred to the valve body based on the temperature. One end of the equalizing pipe is connected to a position at which the outlet of the evaporator 120 is slightly away from the sensing bulb, and is directly connected to the valve body through a capillary pipe, to transfer actual pressure at the outlet of the evaporator 120 to the valve body. The valve body includes a diaphragm. The diaphragm moves upwards under a pressure action to reduce a flow volume of the refrigerant through the expansion valve 130 and seek balance in a dynamic state.

The thermal expansion valve 130, usually referred to as the expansion valve 130, is mounted at an inlet of the evaporator 120 and provides the following two functions:
(1) A throttling function: A liquid refrigerant with a high temperature and high pressure becomes a fog-like hydraulic refrigerant with a low temperature and low pressure after being throttled through a throttle hole of the expansion valve 130, to create a condition for evaporation of the refrigerant.
(2) Controlling the flow volume of the refrigerant: After the liquid refrigerant enters the evaporator 120 and passes through the evaporator 120, the refrigerant changes from a liquid state to a gas state to absorb heat and reduce a temperature of a management object (for example, a vehicle battery). The expansion valve 130 controls the flow volume of the refrigerant to ensure that there is the gaseous refrigerant at the outlet of the evaporator 120. If the flow volume is too large, there is the liquid refrigerant at the outlet, and the liquid refrigerant may enter the compressor and cause a liquid strike. If the flow volume of the refrigerant is too small, evaporation is complete in advance, resulting in insufficient cooling.

In this application, the refrigerant circulation system further includes a refrigerant flow channel plate 140. Refrigerant channels configured to connect devices or ports in the refrigerant circulation system are integrated into the refrigerant flow channel plate 140. The following describes a structure and a configuration of the refrigerant flow channel plate 140 in detail.

The following describes a flowing path, a temperature change, and a gas phase change of the refrigerant in the refrigerant circulation system in detail.

As shown in FIG. 3, the compressor compresses a gaseous refrigerant with a low temperature and low pressure, and the gaseous refrigerant with a high temperature and high pressure that is obtained through compression is discharged from a discharge vent of the compressor. The refrigerant with a high temperature and high pressure passes through the flow channel integrated into the refrigerant flow channel plate 140, and flows into the condenser 110 through a refrigerant inlet of the condenser 110.

It should be noted that, when there are a plurality of condensers 110, a refrigerant inlet 170 of each condenser 110 communicates with the discharge vent of the compressor (through the refrigerant flow channel of the refrigerant flow channel plate).

Heat exchange is performed, in the condenser 110, between the gaseous refrigerant with a high temperature and high pressure and a coolant in the coolant circulation system, and the refrigerant (whose gas phase state is a liquid phase state or a gas-liquid two-phase state) with a low temperature and high pressure that is obtained through heat exchange is discharged. The refrigerant with a low temperature and high pressure passes through the flow channel of the refrigerant flow channel plate 140, and flows into the expansion valve 130.

It should be noted that, when there are a plurality of condensers 110, a refrigerant outlet 175 of each condenser 110 communicates with the refrigerant inlet 170 of the expansion valve 130 (through the refrigerant flow channel of the refrigerant flow channel plate).

In addition, there may be one or more expansion valves 130. When there are a plurality of expansion valves 130, the refrigerant inlet 170 of each expansion valve 130 communicates with the refrigerant outlet 175 of each condenser 110 (through the refrigerant flow channel of the refrigerant flow channel plate).

The refrigerant with a low temperature and high pressure releases pressure and heat in the expansion valve 130, to convert into a refrigerant (whose gas phase state is a liquid phase state or a gas-liquid two-phase state) with a low temperature and low pressure. The refrigerant with a low temperature and low pressure passes through the flow channel integrated into the refrigerant flow channel plate 140, and enters the refrigerant inlet 170 of the evaporator 120.

It should be noted that, when there are a plurality of expansion valves 130, the refrigerant outlet 175 of each expansion valve 130 communicates with the refrigerant inlet 170 of each evaporator 120 (through the refrigerant flow channel of the refrigerant flow channel plate).

In the evaporator 120, heat exchange is performed between the refrigerant with a low temperature and low pressure and a high-temperature coolant (specifically, the refrigerant absorbs heat), to form the refrigerant (whose gas phase state is a gas phase state or a gas-liquid two-phase state) with a high temperature and low pressure. The refrigerant with a high temperature and low pressure passes through the flow channel integrated into the refrigerant flow channel plate 140, and flows into the inlet of the compressor.

It should be noted that, when there are a plurality of evaporators 120, the refrigerant inlet 170 of each evaporator 120 communicates with the refrigerant outlet 175 of each expansion valve 130 (through the refrigerant flow channel of the refrigerant flow channel plate).

In this way, a heat circulation process of the refrigerant is complete.

As described above, a chemical substance used as a refrigerant is usually corrosive, and a temperature difference is large during gas-liquid conversion. Therefore, in this application, a corrosion-resistant, high-temperature-resistant, and low-temperature-resistant material like a metal is configured to manufacture devices such as the refrigerant flow channel plate 140 and the expansion valve 130 in a refrigerant circulation process.

It should be understood that the structure of the refrigerant circulation system shown in FIG. 3 is merely an example for description, and this application is not limited thereto. For example, the refrigerant circulation system may further include a liquid storage tank and a gas-liquid separator 190.

The liquid storage tank is configured to store a refrigerant and supply the refrigerant to the refrigerant circulation system.

The gas-liquid separator 190 is configured to prevent the refrigerant from striking the compressor and ensure secure and normal operating of the compressor. A working principle of the gas-liquid separator 190 is that when a gas-liquid two-phase refrigerant enters the gas-liquid separator, the liquid is separated or strikes on a baffle plate due to a decrease in an expansion speed, to obtain the liquid through separation.

The following describes the coolant circulation system in detail.

Refer to FIG. 3. The coolant system includes a plurality of coolant-end components, for example, a multi-port valve 195, a pump, a radiator, a pump, and a heater.

The multi-port valve 195 includes a plurality of ports, and can control a connection relationship between the plurality of ports. A working principle of the multi-port valve 195 is to connect different flow channels by rotating a valve core, to switch to and control different fluid media. The multi-port valve 195 usually includes a valve body, the valve core, a spring, a sealing ring, a handle, an actuator, and the like. An internal shape of the valve body is designed based on different functional requirements, and the valve body usually includes an inlet, an outlet, a central flow channel, and a plurality of flow channel connection holes. The valve core is usually of a cylindrical shape, and has a plurality of channels inside. Different channels may be connected when the valve core rotates.

It should be noted that a function of the multi-port valve 195 shown in FIG. 3 may alternatively be implemented by a combination of two or more four-port valves, or a combination of one or more four-port valves and one or more three-port valves. This is not particularly limited in embodiments of this application.

The pump is configured to transfer mechanical energy or other external energy to the coolant, to increase energy of the coolant, so as to accelerate a flowing speed and pressure of the coolant.

The radiator is used for heat exchange between the coolant and the external environment.

The heater is configured to heat the coolant. For example, the heater may be an electric heater, and is configured to convert electric energy into heat energy.

As shown in FIG. 3, a port 1 of the multi-port valve 195 communicates with a coolant inlet of the condenser 110.

It should be noted that, although not shown in the figure, the coolant system includes a coolant flow channel configured to communicate the port 1 of the multi-port valve 195 with the coolant inlet of the condenser 110. The flow channel is integrated into a coolant flow channel plate. In the following, unless otherwise specified, that two devices or ports in the coolant system communicate with each other may be understood as that the two devices or ports communicate with each other through the coolant channel.

In addition, when there are a plurality of condensers 110, a coolant inlet of each condenser 110 communicates with the port 1 of the multi-port valve 195 (through the coolant flow channel of the coolant flow channel plate).

A coolant outlet of the condenser 110 communicates with a port 2 of the multi-port valve 195.

It should be noted that, when there are a plurality of condensers 110, the coolant outlet of each condenser 110 communicates with the port 2 of the multi-port valve 195 (through the coolant flow channel of the coolant flow channel plate).

A port 3 of the multi-port valve 195 communicates with a coolant inlet of the evaporator 120, and a coolant outlet of the evaporator 120 communicates with a port 4 of the multi-port valve 195.

It should be noted that, when there are a plurality of evaporators 120, the coolant inlet of each evaporator 120 communicates with the port 3 of the multi-port valve 195 (through the coolant flow channel of the coolant flow channel plate), and the coolant outlet of each evaporator 120 communicates with the port 4 of the multi-port valve 195 (through the coolant flow channel of the coolant flow channel plate).

The port 4 of the multi-port valve 195 communicates with an inlet of the heater, and heat exchange can perform between the coolant flowing out of an outlet of the heater and a battery cluster. The coolant obtained through heat exchange can flow into an inlet of a pump B, and an outlet of the pump B communicates with a port 6 of the multi-port valve 195.

Heat exchange can perform between the coolant flowing out of a port 8 of the multi-port valve 195 and an AC/DC converter or a DC/DC converter, and the coolant obtained through heat exchange can flow into a port 7 of the multi-port valve 195.

A port 10 of the multi-port valve 195 communicates with an inlet of the radiator, an outlet of the radiator communicates with the inlet of the pump B, and the outlet of the pump B communicates with a port 9 of the multi-port valve 195. The following describes a flowing path and a temperature change of the coolant in the coolant system in detail.

As shown in FIG. 3, a low-temperature coolant flows out of the port 1 of the multi-port valve 195, passes through the flow channel integrated into the coolant flow channel plate, and enters the coolant inlet of the condenser 110.

The low-temperature coolant obtained through heat exchange with the high-temperature refrigerant in the condenser 110 heats up, to form the high-temperature coolant.

The high-temperature coolant flows out of the coolant outlet of the condenser 110, passes through the flow channel integrated into the coolant flow channel plate, and enters the port 2 of the multi-port valve 195.

When the thermal management object needs to be heated (for example, when an external temperature is low and the battery cluster needs to be heated), the multi-port valve 195 controls the port 2 to communicate with the port 5. The high-temperature coolant flows out of the port 5 of the multi-port valve 195, and flows into the battery cluster under an action of the pump B. Heat exchange is performed between the coolant and the battery cluster, to form the low-temperature coolant. Then, the low-temperature coolant flows into the port 6 of the multi-port valve 195 under the action of the pump B. It should be noted that, when the new coolant circulation system includes the heater, before the high-temperature coolant flows into the battery cluster, the heater may further heat the high-temperature coolant up. In addition, the multi-port valve 195 may control the port 6 to communicate with the port 1, to perform heat exchange, in the condenser 110, between the low-temperature coolant and the high-temperature refrigerant, so as to form the high-temperature coolant.

As shown in FIG. 3, the high-temperature coolant flows out of the port 3 of the multi-port valve 195, passes through the flow channel integrated into the coolant flow channel plate, and enters the coolant inlet of the evaporator 120. The high-temperature coolant obtained through heat exchange with the low-temperature refrigerant in the evaporator 120 is cooled, to form the low-temperature coolant.

The low-temperature coolant flows out of the coolant outlet of the evaporator 120, passes through the flow channel integrated into the coolant flow channel plate, and enters the port 4 of the multi-port valve 195.

When the battery cluster needs to be cooled, the multi-port valve 195 controls the port 4 to communicate with the port 5. The low-temperature coolant flows out of the port 5 of the multi-port valve 195, and flows into the battery cluster under the action of the pump B. Heat exchange is performed between the coolant and the battery cluster, to form the high-temperature coolant. Then, the high-temperature coolant flows into the port 6 of the multi-port valve 195 under the action of the pump B. In addition, the multi-port valve 195 may control the port 6 to communicate with the port 3, to perform heat exchange, in the evaporator 120, between the high-temperature coolant and the low-temperature refrigerant, so as to form the low-temperature coolant.

When the AC/DC converter or the DC/DC converter needs to be cooled, the multi-port valve 195 controls the port 4 to communicate with the port 8. The low-temperature coolant flows out of the port 8 of the multi-port valve 195, and flows into the AC/DC converter or the DC/DC converter through the coolant channel. Heat exchange is performed between the coolant and the AC/DC converter or the DC/DC converter, to form the high-temperature coolant. Then, the high-temperature coolant flows into the port 7 of the multi-port valve 195. In addition, the multi-port valve 195 may control the port 7 to communicate with the port 3, to perform heat exchange, in the evaporator 120, between the high-temperature coolant and the low-temperature refrigerant, so as to form the low-temperature coolant.

In addition, the multi-port valve 195 controls the port 4 to communicate with the port 10. Under an action of the pump A, the high-temperature coolant flows out of the port 10 of the multi-port valve 195, and flows into the radiator through the coolant channel. Heat exchange is performed, in the radiator, between the coolant and the external environment, to form the low-temperature coolant. Then, the low-temperature coolant flows into the port 9 of the multi-port valve 195. In addition, the multi-port valve 195 may control the port 9 to communicate with the port 1, to perform heat exchange, in the condenser 110, between the low-temperature coolant and the high-temperature refrigerant, so as to form the high-temperature coolant.

In this way, a heat circulation process of the coolant is complete.

As described above, because the coolant has low corrosiveness, and a temperature change after heat exchange is small, in this application, a low-cost waterproof material like plastic or rubber is configured to manufacture devices such as the coolant flow channel plate in the refrigerant circulation process.

It should be noted that the foregoing described coolant and refrigerant circulation processes are merely examples, and this is not particularly limited in this application. For example, in spring and autumn, the refrigerant circulation system may not be enabled. In this case, the low-temperature coolant flows out of the port 5 of the multi-port valve 195, and flows into the battery cluster under the action of the pump B. Heat exchange is performed between the coolant and the battery cluster, to form the high-temperature coolant. Then, the high-temperature coolant flows into the port 6 of the multi-port valve 195 under the action of the pump B. In addition, the multi-port valve 195 may control the port 6 to communicate with the port 10. Under the action of the pump A, the high-temperature coolant flows out of the port 10 of the multi-port valve 195, and flows into the radiator through the coolant channel. Heat exchange is performed, in the radiator, between the coolant and the external environment, to form the low-temperature coolant. Then, the low-temperature coolant flows into the port 9 of the multi-port valve 195. In addition, the multi-port valve 195 may control the port 9 to communicate with the port 5, to complete one coolant circulation process.

It should be understood that the foregoing described structure of the coolant system is merely an example for description, and this application is not limited thereto. For example, the coolant system in this application may not include the heater. For another example, the coolant system in this application may further include a coolant tank. The coolant tank is configured to supply the coolant to the coolant circulation system, to compensate a loss caused by evaporation of the coolant and the like.

For another example, the foregoing describes the working principle of the thermal management system 100 when the refrigerant system is in a cooling mode (or provides a cooling function). However, this application is not limited thereto, and the refrigerant system may further provide a heating function.

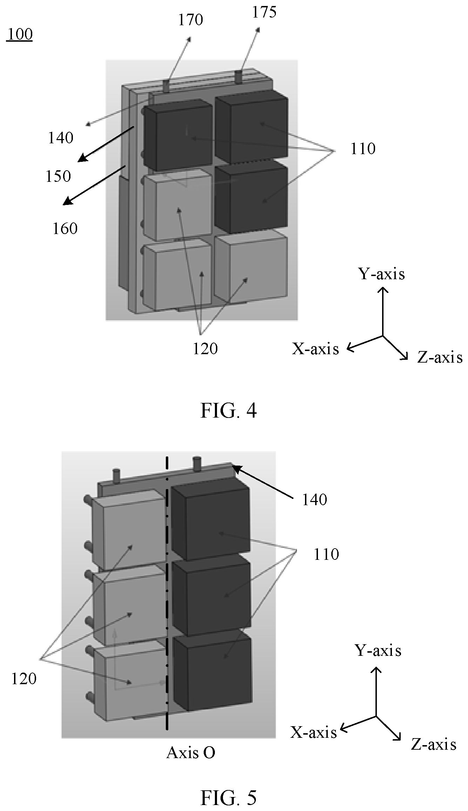

The following describes components of the thermal management system 100 in this application in detail with reference to FIG. 4 to FIG. 10. To reduce mounting and maintenance difficulty, a plurality of elements or components in the thermal management system 100 in this application are integrated.

As shown in FIG. 4 to FIG. 6, the thermal management system 100 includes the refrigerant flow channel plate 140. The refrigerant flow channel plate 140 is integrated with the refrigerant flow channel configured to communicate with the refrigerant-end component of the refrigerant circulation system, so that the refrigerant can enter the refrigerant-end component of the refrigerant circulation system through the refrigerant flow channel.

The refrigerant flow channel plate 140 is formed in a plate shape extending along a first plane, and the first plane is a plane formed by an X-axis and a Y-axis shown in FIG. 4. In other words, the refrigerant flow channel plate 140 includes two surfaces with large areas. One surface is referred to as a configuration surface, and the other surface is referred to as a mounting surface. The configuration surface is formed as a whole in a rough planar shape, but may include a part that is partially concave and convex and that is formed due to design and applicability requirements. In other words, the configuration surface of the refrigerant flow channel plate 140 is formed as a whole in a shape of the first plane that is approximately parallel to the X-axis and the Y-axis. Descriptions of same or similar cases are omitted below to avoid repetition.

When the thermal management system 100 normally operates, the first plane is parallel to the direction of gravity. In other words, when the thermal management system 100 normally operates, a direction of the Y-axis may be understood as a height direction, a direction of a Z-axis shown in FIG. 4 may be understood as a thickness direction, and a direction of the X-axis may be understood as a width direction. In this case, when the thermal management system 100 normally operates, the direction of the X-axis is perpendicular to the direction of gravity, and the direction of the Y-axis is parallel to the direction of gravity.

Each evaporator 120 and each condenser 110 in the heat exchange system are disposed on the configuration plane of the refrigerant flow channel plate 140.

Specifically, a plurality of refrigerant interfaces are disposed on the configuration plane, each refrigerant interface communicates with the refrigerant flow channel of the refrigerant flow channel plate 140, and one refrigerant interface communicates with one evaporator 120 or one condenser 110 that is fastened to the configuration plane. Therefore, the refrigerant from the another device in the refrigerant circulation system can enter the condenser 110 or the evaporator 120 from the refrigerant interface through the refrigerant flow channel in the refrigerant flow channel plate 140. In addition, the refrigerant discharged from the condenser 110 or the evaporator 120 enters the refrigerant flow channel of the refrigerant flow channel plate 140 through the refrigerant interface, and further enters another device in the refrigerant circulation system.

It should be noted that FIG. 4 and FIG. 5 show a case in which the heat exchange system includes a plurality of evaporators 120 and a plurality of condensers 110. However, embodiments of this application are not limited thereto, the heat exchange system may alternatively include one evaporator 120 and one condenser 110.

In an implementation, as shown in FIG. 4, the plurality of evaporators 120 are arranged in at least one row of evaporators 120, each row of evaporators 120 includes a plurality of evaporators 120, and evaporators 120 in a same row of evaporators 120 are arranged in the direction of the X-axis.

In addition, FIG. 4 shows a case in which the plurality of evaporators 120 in the heat exchange system are arranged in one row of evaporators 120. However, embodiments of this application are not limited thereto. The plurality of evaporators 120 in the heat exchange system may alternatively be arranged in a plurality of rows of evaporators 120, and the plurality of rows of evaporators 120 are disposed in parallel to the direction of the Y-axis.

For example, a quantity of evaporators 120 included in each row of evaporators 120 may be the same. Alternatively, there may be at least two rows of evaporators 120 that include different quantities of evaporators 120.

In addition, as shown in FIG. 4, a plurality of condensers 110 are arranged in at least one row of condensers 110, each row of condensers 110 includes a plurality of condensers 110, and condensers 110 in a same row of condensers 110 are arranged in the direction of the X-axis.

In addition, FIG. 4 shows a case in which a plurality of condensers 110 in the heat exchange system are arranged in one row of condensers 110. However, embodiments of this application are not limited thereto. The plurality of condensers 110 in the heat exchange system may alternatively be arranged in a plurality of rows of condensers 110, and the plurality of rows of condensers 110 are arranged in the direction of the Y-axis.

For example, a quantity of condensers 110 included in each row of condensers 110 may be the same. Alternatively, there may be at least two rows of condensers 110 that include different quantities of condensers 110.

In the refrigerant circulation system, in a flow direction of the refrigerant, the condenser 110 is located upstream of the evaporator 120. Therefore, as shown in FIG. 4, when the thermal management system 100 is mounted and normally operates, the refrigerant flow channel plate 140 is disposed in the direction of gravity. In this case, each row of condensers 110 is located above each row of evaporators 120, so that the liquid refrigerant discharged from the condenser 110 can flow into the evaporator 120 under the action of gravity.

It should be noted that a configuration manner in which each row of condensers 110 is located above each row of evaporators 120 is merely an example for description. Alternatively, each row of condensers 110 may be located below each row of evaporators 120. In this case, pressure provided by the compressor may be used to enable the refrigerant in the condenser 110 to flow to the evaporator 120.

For example, a total quantity of condensers 110 may not be an integer multiple of a quantity of condensers 110 included in each row of condensers 110, and a total quantity of evaporators 120 may not be an integer multiple of a quantity of evaporators 120 included in each row of evaporators 120. In this case, as shown in FIG. 4, a mixed row including a condenser 110 and an evaporator 120 may be disposed on the refrigerant flow channel plate 140. In addition, in an implementation, the mixed row is located between the row of condensers 110 and the row of evaporators 120 in the direction of Y-axis.

In another implementation, as shown in FIG. 5, the plurality of evaporators 120 are arranged in at least one column of evaporators 120, each column of evaporators 120 includes a plurality of evaporators 120, and evaporators 120 in a same column of evaporators 120 are arranged in the direction of the Y-axis.

In addition, FIG. 5 shows a case in which a plurality of evaporators 120 in the heat exchange system are arranged in one column of evaporators 120. However, embodiments of this application are not limited thereto. The plurality of evaporators 120 in the heat exchange system may alternatively be arranged in a plurality of columns of evaporators 120, and the plurality of columns of evaporators 120 are disposed in parallel to the direction of the X-axis.

For example, a quantity of evaporators 120 included in each column of evaporators 120 may be the same. Alternatively, there may be at least two columns of evaporators 120 that include different quantities of evaporators 120.

In addition, as shown in FIG. 5, a plurality of condensers 110 are arranged in at least one column of condensers 110, each column of condensers 110 includes a plurality of condensers 110, and condensers 110 in a same column of condensers 110 are arranged in the direction of the Y-axis.

In addition, FIG. 5 shows a case in which a plurality of condensers 110 in the heat exchange system are arranged in one column of condensers 110. However, embodiments of this application are not limited thereto. The plurality of condensers 110 in the heat exchange system may alternatively be arranged in a plurality of columns of condensers 110, and the plurality of columns of condensers 110 are arranged in the direction of the X-axis.

A temperature of the refrigerant in the condenser 110 is higher than a temperature of the refrigerant in the evaporator 120, that is, the condenser 110 is a high-temperature device, and the evaporator 120 is a low-temperature device. Therefore, as shown in FIG. 5, in an implementation, the refrigerant flow channel plate 140 is divided into two parts by an axis O (namely, an example of the first axis) parallel to the Y-axis, to better implement heat insulation. The at least one column of condensers 110 is disposed on one side of the axis O, the at least one column of evaporators 120 is disposed on the other side of the axis O.

For example, a quantity of condensers 110 included in each column of condensers 110 may be the same. Alternatively, there may be at least two columns of condensers 110 that include different quantities of condensers 110.

In embodiments of this application, when there are a plurality of condensers 110, the plurality of condensers 110 may communicate with each other in parallel. In addition, when there are a plurality of evaporators 120, the plurality of evaporators 120 may communicate with each other in parallel.

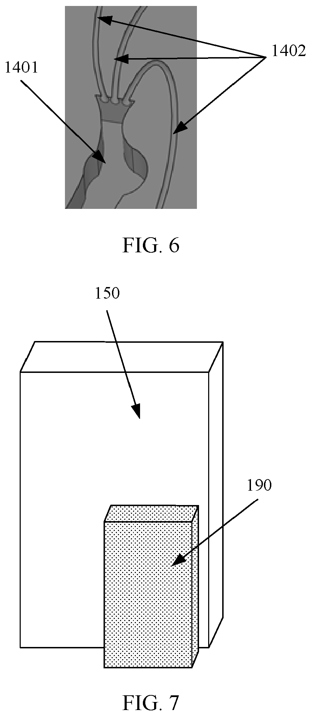

Specifically, as shown in FIG. 6, the refrigerant flow channels of the refrigerant flow channel plate 140 are divided into a main refrigerant flow channel 1401 and a plurality of branch refrigerant flow channels 1402, so that the plurality of condensers 110 (or the plurality of evaporators 120) communicate with each other in parallel.

For example, when there are a plurality of condensers 110, the refrigerant flow channels of the refrigerant flow channel plate 140 include the main refrigerant flow channel 1401 and the plurality of condensation branch refrigerant flow channels 1402 (namely, an example of the branch refrigerant flow channel 1402), and the plurality of condensation branch refrigerant flow channels 1402 one-to-one correspond to the plurality of condensers 110. One end of each condensation branch refrigerant flow channel 1402 communicates with the main refrigerant flow channel 1401, and another end of each condensation branch refrigerant flow channel 1402 communicates with a condenser 110 corresponding to the condensation branch refrigerant flow channel 1402. Therefore, different parts of the refrigerant in the main refrigerant flow channel 1401 separately enter different condensers 110 through different condensation branch refrigerant flow channels 1402.

In an implementation, the plurality of condensation branch refrigerant flow channels 1402 have a same cross-sectional area.

In another implementation, a cross-sectional area of each condensation branch refrigerant flow channel 1402 is less than a cross-sectional area of the main refrigerant flow channel 1401, to avoid uneven flow splitting of the plurality of condensers 110.

In addition, when there are a plurality of evaporators 120, the plurality of evaporators 120 may communicate with each other in parallel. Specifically, the refrigerant flow channels of the refrigerant flow channel plate 140 include the main refrigerant flow channel 1401 and the plurality of evaporation branch refrigerant flow channels 1402 (namely, another example of the branch refrigerant flow channel 1402), and the plurality of evaporation branch refrigerant flow channels 1402 one-to-one correspond to the plurality of evaporators 120. One end of each evaporation branch refrigerant flow channel 1402 communicates with the main refrigerant flow channel 1401, and another end of each evaporation branch refrigerant flow channel 1402 communicates with an evaporator 120 corresponding to the evaporation branch refrigerant flow channel 1402. Therefore, different parts of the refrigerant in the main refrigerant flow channel 1401 separately enter different evaporators 120 through different evaporation branch refrigerant flow channels 1402.

In an implementation, the plurality of evaporation branch refrigerant flow channels 1402 have a same cross-sectional area.

In another implementation, a cross-sectional area of each evaporation branch refrigerant flow channel 1402 is less than a cross-sectional area of the main refrigerant flow channel 1401, to avoid uneven flow splitting of the plurality of evaporators 120.

It should be noted that the cross-sectional area of the condensation branch refrigerant flow channel 1402 may be the same as or different from the cross-sectional area of the evaporation branch refrigerant flow channel 1402. This is not particularly limited in embodiments of this application.

As shown in FIG. 4 and FIG. 5, the refrigerant inlet through which the refrigerant enters the refrigerant flow channel plate 140 and the refrigerant outlet 175 through which the refrigerant is discharged from the refrigerant flow channel plate 140 are further disposed on the refrigerant flow channel plate 140.

In a possible implementation, when the thermal management system 100 normally operates, a direction of the refrigerant flow channel plate 140 is parallel to the direction of gravity. In addition, the compressor is usually farther away from the ground than the refrigerant flow channel plate 140. Therefore, in embodiments of this application, the refrigerant inlet and the refrigerant outlet 175 are disposed on a side surface A that is of the refrigerant flow channel plate 140 and that is away from the ground. This facilitates arrangement of a pipeline configured to connect the refrigerant inlet and the outlet of the compressor and a pipeline configured to connect the refrigerant outlet 175 and the inlet of the compressor.

In addition, in another possible implementation, as shown in FIG. 4 and FIG. 5, the refrigerant inlet and the refrigerant outlet 175 may be formed in tubular shapes extending along the direction of the Y-axis.

As shown in FIG. 4 and FIG. 7 to FIG. 9, the thermal management system 100 includes two coolant flow channel plates. In addition, as shown in FIG. 4, the refrigerant flow channel plate 140 and the two coolant flow channel plates are stacked in the Z direction (namely, the thickness direction of the refrigerant flow channel plate 140). One coolant flow channel plate is located between the other coolant flow channel plate and the refrigerant flow channel plate 140. For ease of understanding and distinguishing, the coolant flow channel plate located in the middle is referred to as a middle-layer coolant flow channel plate 150 (namely, an example of the first coolant flow channel plate), and the other coolant flow channel plate is referred to as a lower-layer coolant flow channel plate (namely, an example of the second coolant flow channel plate).

Coolant flow channels are integrated into each coolant flow channel plate, and the coolant flow channels are configured to communicate coolant-end components in the coolant circulation system. Because there are a large quantity of coolant-end components, arrangement of the coolant flow channels is complex. The coolant flow channels are distributed on the two stacked coolant flow channel plates, to reduce an occupied area of the coolant flow channel plates, and facilitate miniaturization of the thermal management system 100 (specifically, miniaturization of the coolant flow channel plates). In addition, difficulty in arranging the coolant flow channels is reduced.

As shown in FIG. 7, the middle-layer coolant flow channel plate 150 is formed in a plate shape extending along the first plane. In other words, the coolant flow channel plate includes two surfaces with large areas. One surface is referred to as a configuration surface, and the other surface is referred to as a mounting surface. The configuration surface and the mounting surface are formed as a whole in a rough planar shape.

The mounting surface of the middle-layer coolant flow channel plate 150 may be attached and fastened to the mounting surface of the refrigerant flow channel plate 140 in a plurality of manners such as bolt fastening, bonding, or a clamping mechanism.

Some devices in the refrigerant circulation system, for example, the gas-liquid separator 190, are disposed on the configuration plane of the middle-layer coolant flow channel plate 150. The gas-liquid separator 190 may be mounted on the configuration surface of the middle-layer coolant flow channel plate 150 in a plurality of connection or fastening manners such as bolt fastening, bonding, or a clamping mechanism. In addition, a through hole may be opened on the middle-layer coolant flow channel plate 150, so that a pipe configured to connect the gas-liquid separator 190 and the refrigerant flow channel passes through the through hole, and the gas-liquid separator 190 communicates with the refrigerant circulation system.

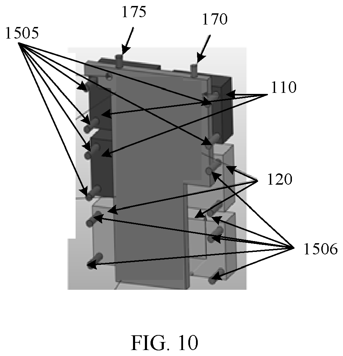

As shown in FIG. 4, the coolant flow channel of the middle-layer coolant flow channel plate 150 further communicates with the condenser 110 and the evaporator 120. Because the coolant flow channel of the middle-layer coolant flow channel plate 150 is separated from the condenser 110 and the evaporator 120 by the refrigerant flow channel plate 140, as shown in FIG. 4 and FIG. 10, projection of the refrigerant flow channel plate 140 on the middle-layer coolant flow channel plate 150 may be located in a partial region (for example, a central region) of the middle-layer coolant flow channel plate 150. Therefore, in another region (namely, two sides of the refrigerant flow channel plate 140), a pipe 1505 configured to communicate the coolant flow channel of the middle-layer coolant flow channel plate 150 with the condenser 110 and a pipe 1506 configured to communicate the coolant flow channel of the middle-layer coolant flow channel plate 150 with the evaporator 120 may be arranged.

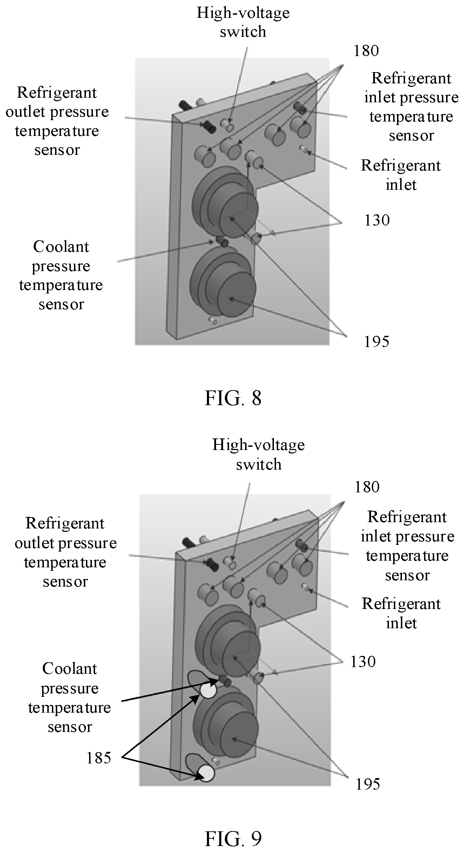

As shown in FIG. 8, the lower-layer coolant flow channel plate is formed in a plate shape extending along the first plane. In other words, the coolant flow channel plate includes two surfaces with large areas. One surface is referred to as a configuration surface, and the other surface is referred to as a mounting surface. The configuration surface and the mounting surface are formed as a whole in a rough planar shape.

The mounting surface of the bottom-layer coolant flow channel plate 160 may be attached and fastened to the configuration surface of the middle-layer coolant flow channel plate 150 in a plurality of manners such as bolt fastening, bonding, or a clamping mechanism.

It should be noted that, because the gas-liquid separator 190 is further mounted on the configuration surface of the middle-layer coolant flow channel plate 150, an area of the bottom-layer coolant flow channel plate 160 may be less than an area of the middle-layer coolant flow channel plate 150, that is, projection of the bottom-layer coolant flow channel plate 160 on the middle-layer coolant flow channel plate 150 occupies only a part of the configuration surface of the middle-layer coolant flow channel plate 150, to facilitate mounting and maintenance of the gas-liquid separator 190. Therefore, the gas-liquid separator 190 can be mounted in another region, and mounting and maintenance of the gas-liquid separator 190 are not affected by configuration of the bottom-layer coolant flow channel plate 160. For example, as shown in FIG. 8 and FIG. 9, the bottom-layer coolant flow channel plate 160 is formed into an "L"-shaped plate. In this case, the gas-liquid separator 190 may be mounted on a region other than the "L-shaped" plate.

Some refrigerant-end components in the refrigerant circulation system, for example, the expansion valve 130, are disposed on the configuration plane of the bottom-layer coolant flow channel plate. The expansion valve 130 is mounted on the configuration surface of the bottom-layer coolant flow channel plate 160 in a plurality of connection or fastening manners such as bolt fastening, bonding, or a clamping mechanism. In addition, a through hole may be opened on the middle-layer coolant flow channel plate 150, so that a pipe configured to connect the expansion valve 130 and the refrigerant flow channel passes through the through hole, and the expansion valve 130 communicates with the refrigerant circulation system.

Some coolant-end components in the coolant circulation system, for example, the multi-port valve 195, are disposed on the configuration plane of the bottom-layer coolant flow channel plate. The multi-port valve 195 is mounted on the configuration surface of the bottom-layer coolant flow channel plate 160 in a plurality of connection or fastening manners such as bolt fastening, bonding, or a clamping mechanism.

As shown in FIG. 5, to facilitate heat insulation between the condenser 110 and the evaporator 120, the plurality of condensers 110 are disposed on one side of the axis O, and the plurality of evaporators 120 are disposed on the other side of the axis O. Similarly, because the gas-liquid separator 190 is a low-temperature device, and the multi-port valve 195 is a high-temperature device, the gas-liquid separator and the evaporator 120 may be located on a same side of the axis O, and the multi-port valve 195 and the condenser 110 are located on a same side of the axis O.

In addition, as shown in FIG. 5, when the evaporators 120 and the condensers 110 are separately arranged in two columns, the expansion valve 130 may be arranged in a region between the column of evaporators 120 and the column of condensers 110. In other words, distances from the expansion valve 130 (or projection of the expansion valve 130 on the refrigerant flow channel plate 140) to the evaporator 120 and the condenser 110 that are located in a same row are the same or approximately the same. This shortens a flow channel path. It should be understood that the foregoing described arrangement of the expansion valve 130 is merely an example for description, and a position of the expansion valve 130 on the configuration plane of the bottom-layer coolant flow channel plate may be randomly set based on an actual requirement.

As shown in FIG. 8, a battery cooling plate interface 180 through which the coolant flows into a battery cooling plate is further disposed on the coolant flow channel plate.

In a possible implementation, as shown in FIG. 8, the battery cooling plate interface 180 is disposed on the configuration surface of the bottom-layer coolant flow channel plate 160.

In addition, in another possible implementation, as shown in FIG. 8, the battery cooling plate interface 180 may be formed in a tubular shape extending along the direction of the Z-axis.

In addition, a quantity of battery cooling plate interfaces 180 shown in FIG. 8 is merely an example for description. The quantity of battery cooling plate interfaces 180 may be randomly adjusted based on a quantity or a type of battery clusters (or a quantity of battery cooling plates configured to exchange heat with the battery cluster) in the energy storage system.

As shown in FIG. 8, a plurality of sensors in the thermal management system 100 are further disposed on the coolant flow channel plate, for example, the air intake pressure temperature sensor, the air exhaust pressure temperature sensor, and the liquid cooling pressure temperature sensor.

It should be noted that holes configured to accommodate or pass through the sensor may be further disposed on the refrigerant flow channel plate 140 and the middle-layer coolant flow channel plate 150, to accommodate the sensor or communicate the sensor with a to-be-detected object.

As shown in FIG. 9, the battery cooling plate interface 180 through which the coolant flows into a cooling plate of the converter (for example, the AC/DC converter and/or the DC/DC converter) is further disposed on the coolant flow channel plate.

In a possible implementation, as shown in FIG. 9, the converter cooling plate interface 185 is disposed on the configuration surface of the bottom-layer coolant flow channel plate 160.

In addition, in another possible implementation, as shown in FIG. 9, the converter cooling plate interface 185 may be formed in a tubular shape extending along the direction of the Z-axis.

In addition, a quantity of converter cooling plate interfaces 185 shown in FIG. 9 is merely an example for description. The quantity of converter cooling plate interfaces 185 may be randomly adjusted based on a quantity or a type of converters (or a quantity of battery cooling plates configured to exchange heat with the converter) in the energy storage system.

The foregoing descriptions are merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

## Claims

1. A thermal management system, comprising a coolant circulation system, a refrigerant circulation system, and at least one heat exchange component, wherein the heat exchange component is configured to perform heat exchange between a coolant and a refrigerant;
the refrigerant circulation system comprises a refrigerant flow channel plate and a plurality of refrigerant-end components, refrigerant flow channels are integrated into the refrigerant flow channel plate, and the refrigerant flow channels are configured to communicate the plurality of refrigerant-end components with the heat exchange component;
the coolant circulation system comprises a first coolant flow channel plate, a second coolant flow channel plate, and a plurality of coolant-end components, the second coolant flow channel plate, the first coolant flow channel plate, and the refrigerant flow channel plate are sequentially stacked, coolant flow channels are integrated into each coolant flow channel plate, coolant flow channels of the first coolant flow channel plate communicate with coolant flow channels of the second coolant flow channel plate, and the coolant flow channels are configured to communicate the plurality of coolant-end components with the heat exchange component; and
the heat exchange component is mounted on a surface that is of the refrigerant flow channel plate and that is away from the second coolant flow channel plate.

2. The thermal management system according to claim 1, wherein the plurality of refrigerant-end components are disposed on at least one of a surface that is of the first coolant flow channel plate and that is away from the refrigerant flow channel plate and a surface that is of the second coolant flow channel plate and that is away from the first coolant flow channel plate.

3. The thermal management system according to claim 1 or 2, wherein the refrigerant-end component disposed on the first coolant flow channel plate is located, on the first coolant flow channel plate, outside projection of the second coolant flow channel plate on the first coolant flow channel plate.

4. The thermal management system according to any one of claims 1 to 3, wherein at least one of the plurality of coolant-end components is disposed on the surface that is of the second coolant flow channel plate and that is away from the first coolant flow channel plate.

5. The thermal management system according to any one of claims 1 to 4, wherein there are a plurality of heat exchange components, and the heat exchange components communicate with the refrigerant flow channels and the coolant flow channels of the first coolant flow channel plate in parallel.

6. The thermal management system according to any one of claims 1 to 5, wherein the heat exchange components comprise at least one condenser and at least one evaporator, the at least one condenser is located on one side of a first axis, the at least one condenser is located on the other side of the first axis, and the first axis is a straight line on a surface that is of the refrigerant flow channel plate and that is away from the first coolant flow channel plate.

7. The thermal management system according to claim 6, wherein the refrigerant-end components comprise a gas-liquid separator, the gas-liquid separator is disposed on the surface that is of the first coolant flow channel plate and that is away from the refrigerant flow channel plate, and the gas-liquid separator and the evaporator are located on the same side of the first axis.

8. The thermal management system according to claim 6 or 7, wherein the coolant-end components comprises a multi-port valve, the multi-port valve is disposed on the surface that is of the second coolant flow channel plate and that is away from the first coolant flow channel plate, and the multi-port valve and the condenser are located on the same side of the first axis.

9. The thermal management system according to any one of claims 6 to 8, wherein the heat exchange components comprise a plurality of condensers and a plurality of evaporators, the plurality of condensers are arranged in at least one column in a direction of the first axis, and the plurality of evaporators are arranged in at least one column in the direction of the first axis.

10. The thermal management system according to any one of claims 6 to 9, wherein the refrigerant-end components comprise an expansion valve, the expansion valve is disposed on the surface that is of the second coolant flow channel plate and that is away from the first coolant flow channel plate, and projection of the expansion valve on the refrigerant flow channel plate is located between the condenser and the evaporator.

11. The thermal management system according to any one of claims 1 to 10, wherein the refrigerant flow channel plate extends in a plate shape, the refrigerant flow channel plate comprises a side wall perpendicular to an extending direction of the refrigerant flow channel plate, and the side wall is provided with a refrigerant inlet and a refrigerant outlet for the refrigerant to flow in and out.

12. The thermal management system according to claim 11, wherein the refrigerant inlet and the refrigerant outlet are formed in a tubular shape extending in a first direction, and the first direction is perpendicular to a side surface on which the refrigerant inlet and the refrigerant outlet are located.

13. The thermal management system according to any one of claims 1 to 12, wherein the surface that is of the second coolant flow channel plate and that is away from the first coolant flow channel plate is provided with a coolant inlet and a coolant outlet for the coolant to flow in and out.

14. The thermal management system according to claim 13, wherein the coolant inlet and the coolant outlet are formed in a tubular shape extending in a second direction, and the second direction is perpendicular to an extending direction of the second coolant flow channel plate.

15. An energy storage system, comprising a battery cluster and the thermal management system according to any one of claims 1 to 14, wherein
a coolant circulation system in the thermal management system comprises a battery liquid cooling plate, one end of the battery liquid cooling plate communicates with one coolant outlet of a second coolant flow channel plate, another end of the battery liquid cooling plate communicates with one coolant inlet of the second coolant flow channel plate, and the coolant outlet communicates with the coolant inlet through a coolant flow channel of the second coolant flow channel plate; and
the battery cluster is disposed on the battery liquid cooling plate.
